# EUROPEAN PATENT APPLICATION

(11) **EP 4 827 240 A1**
(43) Date of publication of application: **21.10.2026**
(21) Application number: 24902426.6
(22) Date of filing: 04.11.2024
(51) Int. Cl.: H05B 45/30

(54) **MULTI-WAVELENGTH POWER LINE CONTROL SIGNAL TRIGGERED LED COLORED LAMP**

(30) Priority: 15.12.2023 CN 202311729856
(71) Applicant: Hangzhou Yun Led Chip Photoelectricity Tech.Co., Ltd., Hangzhou, Zhejiang 311100 (CN)
(72) Inventor: YANG, Yinghan, Hangzhou, Zhejiang 311100 (CN); ZHANG, Zixun, Hangzhou, Zhejiang 311100 (CN)
(74) Representative: Grünecker Patent- und Rechtsanwälte PartG mbB
(86) International application number: PCT/CN2024/129712
(87) International publication number: WO 2025/124002

(57) **Abstract**

The present invention discloses a multi-wavelength LED color light triggered by a power line control signal, comprising: a controller and a light string. A positive terminal and a negative terminal of the controller are connected to the light string, the controller supplies power to the light string via the positive terminal and the negative terminal, and loads the power line control signal on the positive terminal or/and the negative terminal; the light string comprises a plurality of different types of LED modules with fixed wavelength ranges, each type of LED module comprising a driving module triggered by the power line control signal and a fixed wavelength range LED; the driving module controls the fixed wavelength range LED according to the power line control signal; the wavelength range of light emitted by the fixed wavelength range LED of each type of LED module is different. The present invention comprises multiple types of LED modules with fixed wavelength ranges, which are further controlled by the control signal loaded on the power output terminal of the controller, thereby achieving a cost-effective, high-purity, wide-wavelength-range, and richly effective multi-wavelength LED color light triggered by a power line control signal and controlled by a driving chip.

## Description

### Technical Field

The present invention relates to the field of LED color lights, and specifically to a multi-wavelength LED color light triggered by a power line control signal.

### BACKGROUND

Chinese invention patent "A Multi-Code Mixed Color Light Device Triggered by a Power Line Edge Signal " (Application No.: 202110041784.2) discloses a multi-code mixed color light device triggered by a power line edge signal, comprising: a power line edge signal generator for generating address signals and light control signals and loading them onto a power line; several LED modules, each LED module comprising an LED color light group and an LED driver for driving the LED color light group according to the address signals and light control signals loaded on the power line; the several LED modules include two or more LED modules, the several LED modules include two or more LED driver address codes, and the several LED modules are randomly mixed and arranged according to the LED driver address codes. Further, in an embodiment, six LED modules are included, each with different internal address codes, arranged randomly in the product. Each LED module includes: a red light emitting diode, a green light emitting diode, and a blue light emitting diode. Based on this patent scheme, by controlling the combination and duty cycle of the red, green, and blue primary colors of each LED module, different colors can be achieved at different addresses. Under appropriate control methods, each LED module group can achieve colors within the same wavelength range.

Chinese invention patent "A Multi-Code Mixed Color Light Device Triggered by a Power Line Edge Signal" (Application No.: 202110041784.2) and other similar technologies all involve each module including the three primary colors of red, green, and blue, further controlling their light emission combinations and duty cycles to achieve light control of different colors. The colors obtained by these technologies are achieved by the light emission of the red, green, and blue primary colors. The human eye can discern the corresponding emission points of the red, green, and blue primary color LEDs, and the perceived emission color also varies from different viewing angles, seriously affecting the visual effect of light purity. Some application scenarios do not require each module to emit a full color range of light through combinations of red, green, blue, or other primary colors; only the presence of several classic wavelength ranges of light throughout the product is needed, with further dynamic control effects achieved by driving chip control. For such applications, using combinations based on three primary colors or other primary colors increases product costs. Moreover, specific wavelength range colors, such as warm white for Christmas or golden yellow for Valentine's Day, cannot be obtained through combinations of the red, green, and blue primary colors or other primary color combinations.

Therefore, how to provide a multi-wavelength LED color light with high color purity, a wide wavelength range, high product cost-effectiveness, and further rich effects achieved through driving chip control holds significant value.

### SUMMARY

The purpose of the present invention is to provide a multi-wavelength LED color light triggered by a power line control signal. By including a plurality of different types of LED modules with fixed wavelength ranges and controlling them via the power line control signal loaded by a controller at the power output terminal, a high cost-effectiveness, high purity, wide wavelength range, and richly effective multi-wavelength LED color light triggered by the power line control signal and controlled by a driving chip is achieved.

A multi-wavelength LED color light triggered by a power line control signal, comprising:
a controller, and a light string;
a positive terminal and a negative terminal of the controller are connected to the light string, the controller supplies power to the light string via the positive terminal and the negative terminal, and loads the power line control signal on the positive terminal or/and the negative terminal;
the light string comprises a plurality of different types of LED modules with fixed wavelength ranges, each type of LED module comprising a driving module triggered by the power line control signal and a fixed wavelength range LED; the driving module controls the fixed wavelength range LED according to the power line control signal;
the wavelength range of light emitted by the fixed wavelength range LED of each type of LED module is different.

It should be understood that for the same fixed wavelength range LEDs, such as red wavelength range LEDs, the wavelengths emitted by different red LEDs in the same product may also have some variation; such varying LEDs should be understood as belonging to the same fixed wavelength range.

It should be understood that an actual product may include the same number of LED modules for each given fixed wavelength range as well as different numbers of LED modules for each given fixed wavelength range.

It should be understood that the LED modules can be connected in parallel; alternatively, some of the LED modules may be connected in parallel to form a parallel group, with several such parallel groups then connected in series; or some of the LED modules may be connected in series to form a series group, with several such series groups then connected in parallel.

Preferably, the driving module is a driving chip, and the driving chip receives the power line control signal and controls the fixed wavelength range LED. The driving chip is an integrated circuit chip and may integrate a diode circuit and other control circuits.

Preferably, the driving chip integrates a diode circuit to protect the driving chip from damage by reverse voltage when a reverse voltage is applied to the driving chip. After the driving chip integrates the diode circuit, in some application schemes, it is permissible to add a reverse light emitting module between a power line and a ground line of the LED module. The reverse light emitting module can be a common warm white light emitting diode, or it can be an LED module with a fixed wavelength range, thereby achieving richer product effects.

Preferably, the driving chip is triggered by the power line control signal to perform an operation, and drives the fixed wavelength range LED based on a result of the operation.

Preferably, the power line control signal includes an address signal, the driving chip receives the address signal and compares it with an address code of the driving chip, and when the received address signal matches the address code of the driving chip, the power line control signal is executed.

Preferably, the driving chip with a given address code controls a given fixed wavelength range LED according to the power line control signal.

Preferably, the operation is an arithmetic operation, or a logical operation, or a combination of arithmetic and logical operations; it can be a digital operation or an analog operation.

As an alternative implementation scheme, the driving chip performs a pulse counting operation based on the power line control signal.

As an alternative implementation scheme, the driving chip performs encoding or decoding operations on the power line control signal, and the pulse high and low level widths of the power line control signal correspond to encoding information. Preferably, different logical encoding information is represented by different lengths of high levels, or different lengths of low levels, or combinations of different lengths of high levels and different lengths of low levels of the power line control signal.

As an alternative implementation scheme, the driving chip performs modulation or demodulation operations on the power line control signal based on current or voltage frequency, and drives the controlled LED according to the modulation or demodulation operation result.

Preferably, the controller comprises a controllable switch module, and the power line control signal is loaded via the controllable switch module.

Preferably, the power line control signal is loaded by controlling the turn-on and turn-off of the controllable switch module. It should be understood that when the power line control signal is loaded by turning the controllable switch module on and off, the fixed wavelength range LED module receives power simultaneously with receiving pulse signals, or rising edge signals, or falling edge signals formed by the turn-on and turn-off of the controllable switch module.

As an alternative implementation scheme, the controllable switch module comprises a first controllable switch and an intermediate level module; when the first controllable switch is turned off, the intermediate level module forms a second voltage level, and the power line control signal is loaded by switching between a supply level and the second voltage level. The second voltage level is higher than the reference ground and lower than the supply level.

Preferably, the light string comprises three types of LED modules with different fixed wavelength ranges; preferably, the fixed wavelength range LED is a red LED, a green LED, and a blue LED, respectively. In products arranged in address sequence, the use of three or more types of LED modules with different fixed wavelength ranges achieves a significantly remarkable chasing/water-flow effect.

Preferably, the light string comprises six types of LED modules with different fixed wavelength ranges, which are respectively a first LED module, a second LED module, a third LED module, a fourth LED module, a fifth LED module, and a sixth LED module;

the driving chip's address code of the first LED module is a first address, the driving chip's address code of the second LED module is a second address, the driving chip's address code of the third LED module is a third address, the driving chip's address code of the fourth LED module is a fourth address, the driving chip's address code of the fifth LED module is a fifth address, and the driving chip's address code of the sixth LED module is a sixth address.

Preferably, the plurality of different types of LED modules with fixed wavelength ranges are arranged in a fixed pattern according to the driving chip's address codes.

Preferably, they are arranged in order of the driving chip's address codes. When arranged in order, the controller can control the LED modules to light up sequentially according to the arrangement order, achieving a multi-colored flowing water effect control.

Alternatively, they are arranged according to fixed address combinations.

As an alternative implementation, the plurality of different types of LED modules with fixed wavelength ranges are randomly mixed and arranged. When arranged randomly with mixed codes, the controller can control the LED modules to achieve a controllable random flickering effect. For example, by controlling an LED module with a given address code to quickly flash on and off once, the LED corresponding to the LED module with the given address code flashes on and off once. Since several types of fixed wavelength range LED modules are randomly arranged throughout the product, the position of the LED module with the given address code in the entire product is random, thus achieving a controllable random flickering effect. Further, through software control, various controllable random flickering effects can be achieved.

Preferably, the fixed wavelength range LED of the first LED module is a red LED, the fixed wavelength range LED of the second LED module is a green LED, the fixed wavelength range LED of the third LED module is an orange LED, the fixed wavelength range LED of the fourth LED module is a blue LED, the fixed wavelength range LED of the fifth LED module is a purple LED, and the fixed wavelength range LED of the sixth LED module is a warm white LED.

In some schemes, the driving chip has a plurality of output channels, wherein one channel is used to drive the fixed wavelength range LED, and the remaining channels drive LEDs of the same wavelength range. In some embodiments, the remaining channels of the driving chip drive warm white LEDs.

The color light provided by the present invention, by including a plurality of different types of LED modules with fixed wavelength ranges, having the driving module control the fixed wavelength range LED modules according to the power line control signal, and further having the controller load the power line control signal at the power output terminal for control, achieves a high cost-effectiveness, high purity, wide wavelength range, and richly effective multi-wavelength LED color light triggered by the power line control signal and controlled by the driving chip.

Compared to the scheme where each LED module includes three LEDs of the red, green, and blue primary colors, the present invention forms the following four advantages: 1. The LED module only requires a single light emitting diode of the target fixed wavelength, saving the material cost of light emitting diodes; 2. The LED module only requires the soldering of a single light emitting diode of the target fixed wavelength, greatly reducing the number of packaging wire bonding times, lowering packaging costs and defect rates; 3. When the LED module lights up the target fixed wavelength light emitting diode, multiple light spots are not formed; 4. The driving chip of the LED module only needs one IO port to drive the target fixed wavelength light emitting diode, saving excess IO port chip resources, thereby reducing the cost of the driving chip.

### BRIEF DESCRIPTION OF DRAWINGS

FIG. 1 is a multi-wavelength LED color light triggered by a power line control signal in a fully parallel connection method provided by an embodiment;
FIG. 2 is a red LED module in the embodiment;
FIG. 3 is a green LED module in the embodiment;
FIG. 4 is an orange LED module in the embodiment;
FIG. 5 is a blue LED module in the embodiment;
FIG. 6 is a purple LED module in the embodiment;
FIG. 7 is a warm white LED module in the embodiment;
FIG. 8 is a driving chip in the embodiment;
FIG. 9 is a controller in the embodiment;

### DETAILED DESCRIPTION

The present invention will be further described in detail below with reference to the accompanying drawings and specific embodiments.

### Embodiment

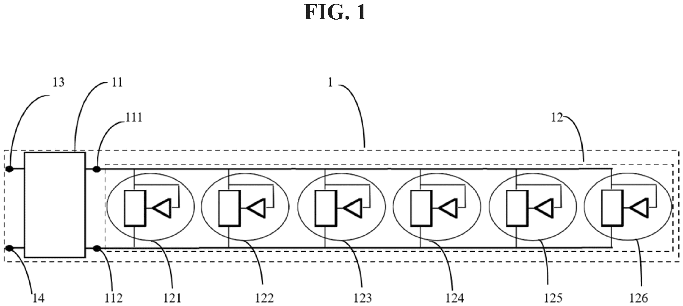

As shown in FIG. 1, a multi-wavelength LED color light 1 triggered by a power line control signal in a fully parallel connection method comprises:
a controller 11, and a light string 12;
the controller 11 supplies power to the light string 12 via a positive terminal 111 and a negative terminal 112, and loads a power line control signal on the negative terminal 112;
the light string 1 comprises six types of LED modules with fixed wavelength ranges. These are respectively a red LED module 121, a green LED module 122, an orange LED module 123, a blue LED module 124, a purple LED module 125, and a warm white LED module 126. The six types of fixed wavelength range LED modules are connected in parallel. In the embodiment, each type of fixed wavelength range LED module include one module. In other embodiments, each type of fixed wavelength range LED module may include multiple modules in equal or different quantities.

The controller 11 is connected to a 3.3V power supply positive terminal at an input terminal 13, and the controller 11 is connected to a 3.3V power supply negative terminal at an input terminal 14.

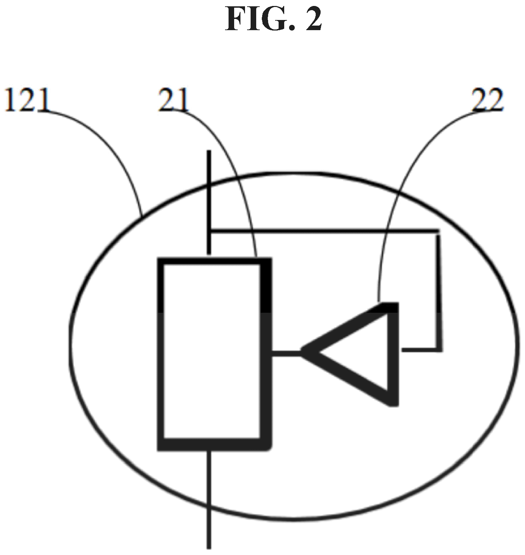

The structure of the red LED module 121 is as shown in FIG. 2, comprising a driving chip 21 and a red LED 22 fixed in the red wavelength range. The driving chip 21 receives the power line control signal and controls the red LED 22 to be on or off, or to have a duty cycle brightness. As shown in FIG. 2, the output terminal of the driving chip 21 is connected to the cathode of the red LED 22, and the power supply terminal of the driving chip 21 is connected to the anode of the red LED 22. The address code of the driving chip 21 is 1.

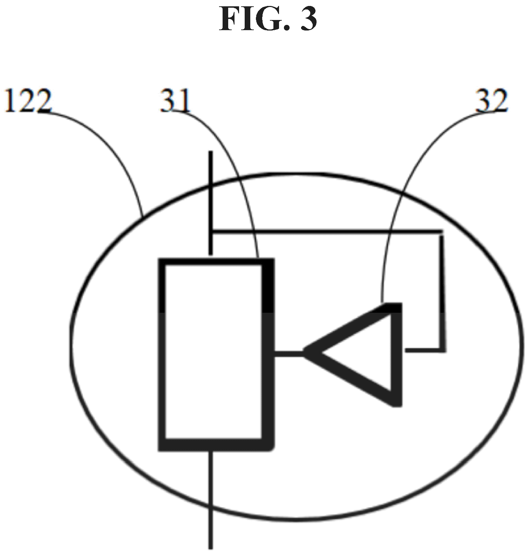

The structure of the green LED module 122 is as shown in FIG. 3, comprising a driving chip 31 and a green LED 32 fixed in the green wavelength range. The driving chip 31 receives the power line control signal and controls the green LED 32 to be on or off, or to have a duty cycle brightness. As shown in FIG. 3, the output terminal of the driving chip 31 is connected to the cathode of the green LED 32, and the power supply terminal of the driving chip 31 is connected to the anode of the green LED 32. The address code of the driving chip 31 is 2.

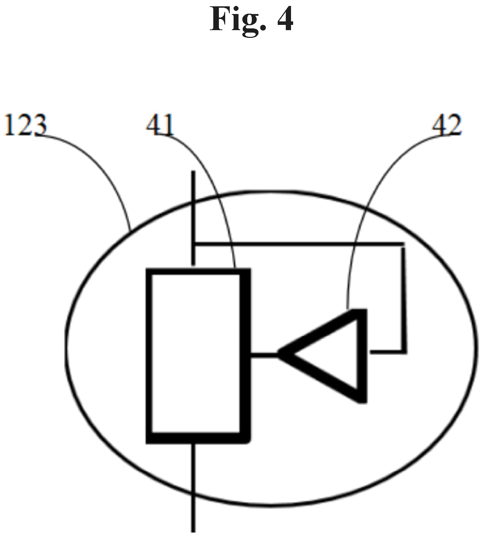

The structure of the orange LED module 123 is as shown in FIG. 4, comprising a driving chip 41 and an orange LED 42 fixed in the orange wavelength range. The driving chip 41 receives the power line control signal and controls the orange LED 42 to be on or off, or to have a duty cycle brightness. As shown in FIG. 4, the output terminal of the driving chip 41 is connected to the cathode of the orange LED 42, and the power supply terminal of the driving chip 41 is connected to the anode of the orange LED 42. The address code of the driving chip 41 is 3.

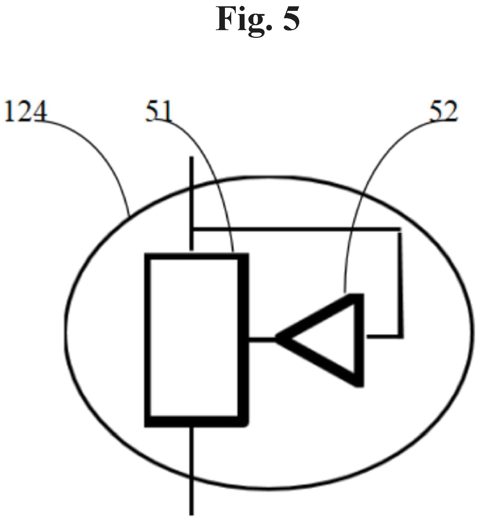

The structure of the blue LED module 124 is as shown in FIG. 5, comprising a driving chip 51 and a blue LED 52 fixed in the blue wavelength range. The driving chip 51 receives the power line control signal and controls the blue LED 52 to be on or off, or to have a duty cycle brightness. As shown in FIG. 5, the output terminal of the driving chip 51 is connected to the cathode of the blue LED 52, and the power supply terminal of the driving chip 51 is connected to the anode of the blue LED 52. The address code of the driving chip 51 is 4.

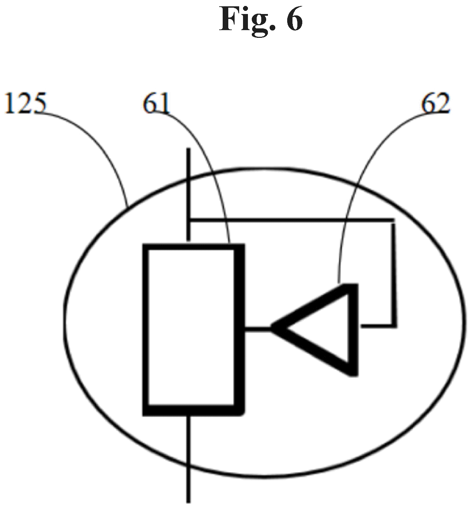

The structure of the purple LED module 125 is as shown in FIG. 6, comprising a driving chip 61 and a purple LED 62 fixed in the purple wavelength range. The driving chip 61 receives the power line control signal and controls the purple LED 62 to be on or off, or to have a duty cycle brightness. As shown in FIG. 6, the output terminal of the driving chip 61 is connected to the cathode of the purple LED 62, and the power supply terminal of the driving chip 61 is connected to the anode of the purple LED 62. The address code of the driving chip 61 is 5.

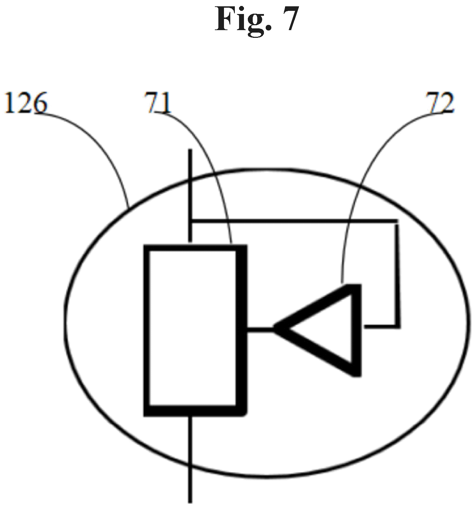

The structure of the warm white LED module 126 is as shown in FIG. 7, comprising a driving chip 71 and a warm white LED 72 fixed in the aqua-blue wavelength range. The driving chip 71 receives the power line control signal and controls the warm white LED 72 to be on or off, or to have a duty cycle brightness. As shown in FIG. 7, the output terminal of the driving chip 71 is connected to the cathode of the warm white LED 72, and the power supply terminal of the driving chip 71 is connected to the anode of the warm white LED 72. The address code of the driving chip 71 is 6.

The six fixed wavelength range LED modules are arranged in order of chip address codes.

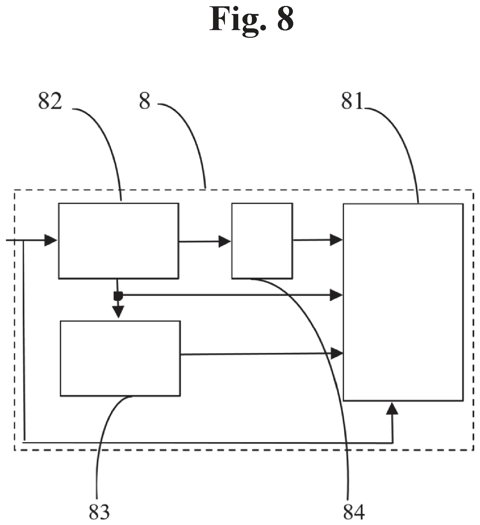

Driving chip 21, driving chip 31, driving chip 41, driving chip 51, driving chip 61, and driving chip 71 all have the same structure. As shown in FIG. 8, a driving chip 8 comprises: an operation unit 81 triggered by a control signal, for performing operations according to the power line control signal input from the power line and outputting operation results; a charging unit 82, for providing a supply level for the operation unit 81 according to the power line control signal input from the power line, charging when the power line control signal is at a high level and discharging when the power line control signal is at a low level; an initialization unit 83, powered by the charging unit 82, for initializing the operation unit 81 according to the supply level provided by the charging unit 82; an address module 84, powered by the charging unit 82, for storing the address code of the driving chip 8.

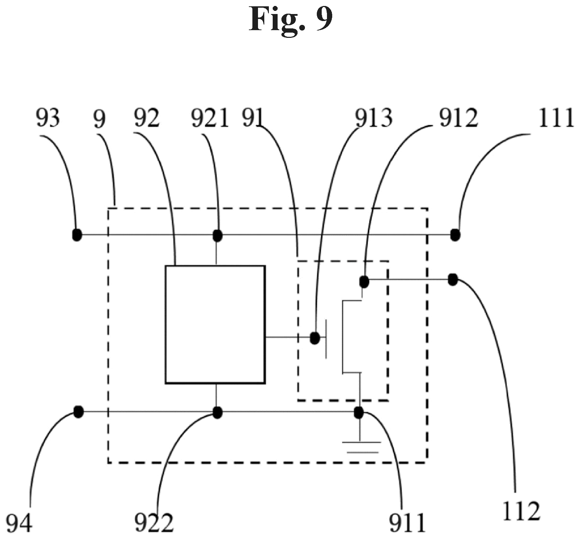

As shown in FIG. 9, a controller 9 (the controller 11 in this embodiment adopts the structure shown in FIG. 9) comprises an NMOS 91 as a controllable switch: the drain 911 of the NMOS is grounded, the source 912 serves as the negative terminal 112 of the controller 9, and the gate 913 is connected to a microprocessor 92; an input terminal 93 of the controller 9 is connected to a 3.3V power supply positive terminal and serves as the positive terminal 111 of the controller; an input terminal 94 of the controller 9 is connected to a 3.3V power supply negative terminal, and is commonly grounded with the drain 911 of the NMOS; a power supply terminal 921 of the microprocessor 92 is connected to the input terminal 93 of the controller 9, and a ground 922 of the microprocessor 92 is connected to the input terminal 94 of the controller 9 and the 3.3V power supply negative terminal. By running a software program on the microprocessor 92, the on/off state of the NMOS 91 is controlled to form a power line control signal, which is loaded on the negative terminal 112.

The above are only preferred embodiments of the present invention and are not intended to limit the present invention. Any modifications, equivalent replacements, and improvements made within the spirit and principles of the present invention shall be included within the scope of protection of the present invention.

## Claims

1. A multi-wavelength LED color light (1) triggered by a power line control signal, the LED color light comprises:
a controller (11), and a light string (12);
a positive terminal (111) and a negative terminal (112) of the controller (11) are connected to the light string (12), the controller (11) supplies power to the light string (12) via the positive terminal (111) and the negative terminal (112), and loads the power line control signal on the positive terminal (111) or/and the negative terminal (112);
the light string (12) comprises a plurality of different types of LED modules (121, 122, 123, 124, 125, 126) with fixed wavelength ranges, each type of LED module (121, 122, 123, 124, 125, 126) comprising a driving module triggered by the power line control signal and a fixed wavelength range LED (22, 32, 42, 52, 62, 72); the driving module controls the fixed wavelength range LED according to the power line control signal;
the wavelength range of light emitted by the fixed wavelength range LED (22, 32, 42, 52, 62, 72) of each type of LED module (121, 122, 123, 124, 125, 126) is different.

2. The LED color light according to claim 1, wherein the driving module is a driving chip (21, 31, 41, 51, 61, 71), and the driving chip (21, 31, 41, 51, 61, 71) receives the power line control signal and controls the fixed wavelength range LED (22, 32, 42, 52, 62, 72).

3. The LED color light according to claim 2, wherein the driving chip (21, 31, 41, 51, 61, 71) is triggered by the power line control signal to perform an operation, and drives the fixed wavelength range LED (22, 32, 42, 52, 62, 72) based on a result of the operation.

4. The LED color light according to claim 3, wherein the power line control signal includes an address signal, the driving chip (21, 31, 41, 51, 61, 71) receives the address signal and compares it with an address code of the driving chip, and when the received address signal matches the address code of the driving chip, the power line control signal is executed.

5. The LED color light according to claim 4, wherein the operation is an arithmetic operation, or a logical operation, or a combination of arithmetic and logical operations.

6. The LED color light according to claim 4, wherein the driving chip (21, 31, 41, 51, 61, 71) performs a pulse counting operation based on the power line control signal.

7. The LED color light according to claim 4, wherein the driving chip (21, 31, 41, 51, 61, 71) performs an encoding or decoding operation on the power line control signal, and the pulse high or low level widths of the power line control signal correspond to encoding information.

8. The LED color light according to claim 7, wherein different logical encoding information is represented by different lengths of high levels, or different lengths of low levels, or combinations of different lengths of high levels and different lengths of low levels of the power line control signal.

9. The LED color light according to claim 4, wherein the driving chip performs a modulation or demodulation operation on the power line control signal based on current or voltage frequency, and drives the controlled LED (22, 32, 42, 52, 62, 72) according to the modulation or demodulation operation result.

10. The LED color light according to claim 4, wherein the controller (11) comprises a controllable switch module, and the power line control signal is loaded via the controllable switch module.

11. The LED color light according to claim 10, wherein the controllable switch module comprises a first controllable switch and an intermediate level module; when the first controllable switch is turned off, the intermediate level module forms a second level, and the power line control signal is loaded by switching between a supply level and the second level.

12. The LED color light according to claim 10, wherein the power line control signal is loaded by controlling the turn-on and turn-off of the controllable switch module.

13. The LED color light according to claim 1, wherein the light string comprises at least three types of LED modules with different fixed wavelength ranges.

14. The LED color light according to claim 4, wherein the light string comprises six types of LED modules with different fixed wavelength ranges, which are respectively a first LED module (121) , a second LED module (122) , a third LED module (123), a fourth LED module (124), a fifth LED module (125), and a sixth LED module (126);
the driving chip's address code of the first LED module (121) is a first address, the driving chip's address code of the second LED module (122) is a second address, the driving chip's address code of the third LED module (123) is a third address, the driving chip's address code of the fourth LED module (124) is a fourth address, the driving chip's address code of the fifth LED module (125) is a fifth address, and the driving chip's address code of the sixth LED module (126) is a sixth address.

15. The LED color light according to claim 14, wherein the fixed wavelength range LED of the first LED module (121) is a red LED (22), the fixed wavelength range LED of the second LED module (122) is a green LED (32), the fixed wavelength range LED of the third LED module (123) is an orange LED (42), the fixed wavelength range LED of the fourth LED module (124) is a blue LED (52), the fixed wavelength range LED of the fifth LED module (125) is a purple LED (62), and the fixed wavelength range LED of the sixth LED module (126) is a warm white LED (72).
